# EUROPÄISCHE PATENTANMELDUNG

(11) **EP 2 272 779 A1**
(43) Veröffentlichungstag der Anmeldung: **12.01.2011**
(21) Anmeldenummer: 10185713.4
(22) Anmeldetag: 31.05.2005
(51) Int. Cl.: B65G 53/56, B65G 53/46, F16L 41/03, B08B 9/055, B67D 7/78

(54) **Molchbare Verteilervorrichtung**

(62) Teilanmeldung aus: 05090174.3
(71) Anmelder: I.S.T. Industrie Service Technologie Beratungs-und Beteiligungsgesellschaft mbH, 22145 Hamburg (DE)
(72) Erfinder: Die Erfindernennung liegt noch nicht vor
(74) Vertreter: Wenzel & Kalkoff

(57) **Zusammenfassung**

Die Erfindung betrifft eine molchbare Verteilervorrichtung (10) zum Herstellen von Verbindungen einer Mehrzahl einen Knotenpunkt definierender Rohrleitungen (16-19), mit mindestens zwei molchbaren Leitungsabschnitten (20-22; 51-53; 65-68) zur Herstellung unterschiedlicher Rohrverbindungen zwischen einer Mehrzahl den Rohrleitungen (16-19) entsprechender Rohranschlüsse (11-14; 61-64), und zeichnet sich dadurch aus, dass die Verteilervorrichtung (10) ein einheitliches Verteilerelement (29; 50; 54; 60) umfasst, in dem die Leitungsabschnitte (20-22; 51-53; 65-68) angeordnet sind und das zwischen einer ersten Durchlassposition, in der ein erster der Leitungsabschnitte (20-22; 51-53; 65-68) eine erste molchbare Durchlassverbindung zweier Rohranschlüsse herstellt, und einer zweiten Durchlassposition, in der ein zweiter der Leitungsabschnitte (20-22; 51-53; 65-68) eine zweite molchbare Durchlassverbindung zweier Rohranschlüsse herstellt, mechanisch verstellbar ist, wobei sämtliche Durchlassverbindungen zwischen den Rohranschlüssen (11-14; 61-64) der Verteilervorrichtung (10) in sämtlichen Durchlasspositioncn molchbar sind, wobei das Verteilerelement (50; 54; 60) dreh- bzw. schwenkbar gelagert ist.

## Beschreibung

Die Erfindung betrifft eine molchbare Verteilervorrichtung nach dem Oberbegriff von Anspruch 1.

Bekannt ist eine Verteilervorrichtung zum Verbinden von sich kreuzenden Rohrleitungen, wobei ein Leitungsabschnitt in der Verteilervorrichtung molchbar ist, ein anderer jedoch entweder gar nicht oder allenfalls teilweise (DE 296 23 648 Ul, DE 296 03 818 U1). Bei manchen Anwendungen kann jedoch die vollständige Molchbarkeit sämtlicher Leitungsabschnitte in der Verteilervorrichtung in sämtlichen Durchlasspositionen erwünscht sein.

Aus der DE 35 06 221 C1 und EP 0 254 764 B1 ist eine Verteilervorrichtung zum Verbinden von sich kreuzenden Rohrleitungen bekannt, die für jede Rohrleitung ein längenveränderliches Leitungselement, beispielsweise einen Schlauch, ein Teleskoprohr oder eine Gelenkrohrverbindung vorsieht. Zur Verbindung zweier Rohrleitungen werden die Enden der entsprechenden längenveränderlichen Elemente miteinander verbunden.

Aus der DE 195 47 394 C2 ist eine molchbare Verteilervorrichtung mit zwei drehbar gelagerten, unabhängig voneinander verstellbaren gebogenen Rohrstücken nach dem Oberbegriff von Anspruch 1 bekannt.

Die Aufgabe der vorliegenden Erfindung besteht darin, mit einfachen Mitteln eine vollmolchbare Verteilervorrichtung für eine Mehrzahl von einen Knotenpunkt definierenden Rohrleitungen bereitzustellen, die eine zuverlässige Einstellung von Rohrleitungsverbindungen ermöglicht.

Die Erfindung löst diese Aufgabe mit den Mitteln von Anspruch 1. Durch einfaches Verstellen des Verteilerelements können die unterschiedlichen gewünschten Durchlassverbindungen zwischen den Rohranschlüssen eingestellt werden. Aufgrund der Verwendung von molchbaren Leitungsabschnitten, die mittels des Verteilerelements verstellt werden, ist eine vollständige Molchbarkeit sämtlicher Rohrleitungsverbindungen in der Verteilervorrichtung in sämtlichen Durchlasspositionen sichergestellt.

Erfindungsgemäß handelt es sich um ein einheitliches Verteilerelement, das mittels einer Betätigungseinrichtung einheitlich verstellbar ist. Insbesondere handelt es sich um ein einteiliges oder in sich starres Verteilerelement. Die Erfindung ist damit abgegrenzt gegenüber Verteilervorrichtungen mit zwei unabhängig voneinander verstellbaren Verteilerelementen, wie aus der DE 195 47 394 C2 bekannt, die einen erheblich höheren Einstell-Aufwand erfordern.

Eine Mehrzahl von Rohrleitungen im Sinne der Erfindung sind mindestens drei, vorzugsweise mindestens vier Rohrleitungen. Der Begriff Knotenpunkt umfasst daher beispielsweise einen Verzweigungspunkt zwischen drei Rohrleitungen, ist jedoch bevorzugt anwendbar auf einen Kreuzungspunkt zwischen vier Rohrleitungen. Ein Verteilerelement umfasst vorzugsweise mindestens drei, vorzugsweise mindestens vier Leitungsabschnitte. Der Begriff Rohrleitungsebene bezeichnet eine durch die zu verbindenden Rohrleitungen definierte Ebene. Bei vielen Anwendungen handelt es sich um eine im Wesentlichen horizontale Ebene. "Im wesentlichen" linearer oder um 90° gebogener Leitungsabschnitt bedeutet insbesondere, dass der Leitungsabschnitt in einer Ansicht senkrecht zu der Rohrleitungsebene linear oder um 90° gebogen erscheint.

Die Verteilervorrichtung ist dem entsprechenden Knotenpunkt eindeutig zugeordnet. Bei einer Rohrleitungsanlage mit einer Mehrzahl sich kreuzender Rohrleitungen ist daher jede Verteilervorrichtung einem entsprechenden Knotenpunkt, Kreuzungspunkt oder Verzweigungspunkt eindeutig zugeordnet. Hierdurch unterscheidet sich die Erfindung von einer Verteilervorrichtung, die einer Mehrzahl von Knotenpunkten, Kreuzungspunkten oder Verzweigungspunkten zugeordnet ist.

Das Verteilerelement wird im Sinne einer mechanischen Zwangsführung, d.h. auf einem mechanisch festgelegten Weg, zwischen der ersten und der zweiten Durchlassposition verschoben bzw. gedreht. Hierdurch wird eine einfache Verstellung des Verteilerelements erreicht und die Gefahr von Fehlverbindungen reduziert.

Die Erfindung betrifft die Verstellung von in einer Verteilereinheit zusammengefassten molchbaren Leitungsabschnitten. Die Erfindung ist dadurch abgegrenzt von Verteilervorrichtungen mit ausschließlich feststehenden Leitungsabschnitten bzw. Rohrstücken, bei denen unterschiedliche Rohrleitungsverbindungen mittels verstellbarer Absperrorgane erzeugt werden.

Wenn die Verteilervorrichtung vorzugsweise Verschlussmittel aufweist, welche die zu verbindenden Rohranschlüsse beim Verstellvorgang des Verteilerelements verschließen, werden offene Rohrleitungen insbesondere beim Verstellvorgang vermieden. Die Rohrleitungsanlage ist dann jederzeit vollständig geschlossen, um ein ungewolltes Austreten von Produkt aus der Rohrleitungsanlage oder eine Kontamination von Produkt durch eintretende Fremdstoffe zu verhindern.

Weitere vorteilhafte Merkmale gehen aus den Unteransprüchen und der folgenden Beschreibung vorteilhafter Ausführungsbeispiele unter Bezugnahme auf die beigefügten Zeichnungen hervor. Es zeigen:
- Fig. 1:: eine seitliche Ansicht auf eine Verteilervorrichtung nach einer ersten Ausführungsform in einer ersten Durchlassposition;
- Fig. 2:: eine Draufsicht auf die Verteilervorrichtung aus Fig. 1;
- Fig. 3:: eine seitliche Ansicht auf die Verteilervorrichtung aus Fig. 1 in einer zweiten Durchlassposition;
- Fig. 4:: eine Ansicht auf die Verteilervorrichtung aus Fig. 3 von unten;
- Fig. 5:: eine Draufsicht auf eine Verteileranordnung;
- Fig. 6:: eine seitliche Ansicht auf eine Verteilervorrichtung nach einer zweiten Ausführungsform in einer ersten Durchlassposition;
- Fig. 7:: eine seitliche Ansicht auf die Verteilervorrichtung aus Fig. 6 in einer zweiten Durchlassposition;
- Fig. 8:: eine seitliche Ansicht auf eine Verteilervorrichtung nach einer dritten Ausführungsform in einer ersten Durchlassposition;
- Fig. 9:: eine Draufsicht auf eine Verteilervorrichtung nach einer vierten Ausführungsform in einer ersten Durchlassposition; und
- Fig. 10:: eine seitliche Ansicht auf die Verteilervorrichtung aus Fig. 9.

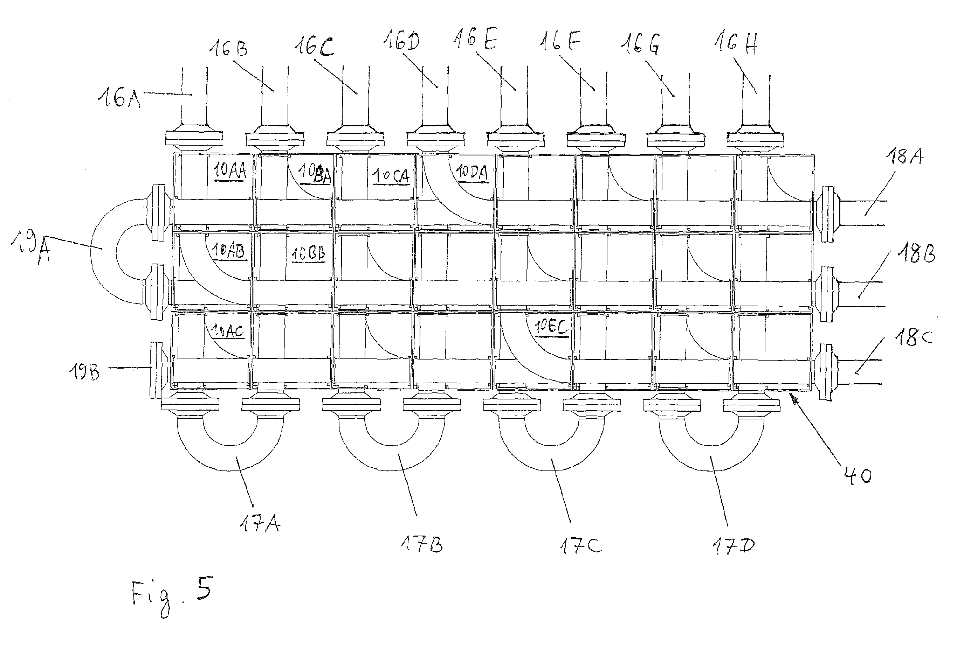

Eine Verteilervorrichtung 10 umfasst vier Rohrleitungsanschlüsse 11 bis 14, die an einem Rahmen 15 befestigt und zur Verbindung mit Rohrleitungen 16 bis 19 eingerichtet sind. Der Rahmen 15 kann beispielsweise vier Seitenflächen 30 bis 34 und eine Deckelfläche 35 umfassen. Der Rahmen 15 hat vorzugsweise eine rechteckige Form, um eine einfache modulartige Kombinierbarkeit einer Mehrzahl von Verteilervorrichtungen zu ermöglichen, siehe beispielsweise Fig. 5. Die Verteilervorrichtung 10 umfasst weiterhin Leitungsabschnitte, die hier in Form von molchbaren Rohrstücken 20 bis 22 ausgebildet sind. Ein erstes lineares Rohrstück 20 ist zur Verbindung der Rohranschlüsse 11 und 12 vorgesehen, ein zweites lineares Rohrstück 21 zur Verbindung der Rohranschlüsse 13 und 14 und ein im Wesentlichen um 90° gebogenes Rohrstück 22 zur Verbindung der Rohranschlüsse 12 und 14.

Die Rohrstücke 20 bis 22 sind mittels Verbindungselementen 23 bis 26 zu einem einheitlichen Verteilerelement 29 verbunden. Die Verbindungselemente 23 bis 26 sind hier als plattenförmige Elemente ausgeführt, die jeweils an einem Rohrstückende angebracht sind oder jeweils zwei Rohrstückenden miteinander verbinden. Das Verbindungselement 23 ist mit einem Ende des Rohrstücks 20 verbunden. Das Verbindungselement 24 verbindet das andere Ende des Rohrstücks 20 mit einem Ende des Rohrstücks 22. Das Verbindungselement 25 ist mit einem Ende des Rohrstücks 21 verbunden. Das Verbindungselement 26 verbindet die jeweils anderen Enden der Rohrstücke 21 und 22.

Das Verteilerelement 29 ist in dem Rahmen 15 verschiebbar geführt. Zu diesem Zweck sind lineare Führungsschienen 36 bis 39 für die Verbindungselemente 23 bis 26 vorgesehen. Das Verteilerelement 29 ist weiterhin mit einer zweckmäßigerweise an dem Gehäuse 15 angebrachten Betätigungseinrichtung 27 zur automatischen Verstellung bzw. Verschiebung des Verteilerelements 29 verbunden, beispielsweise mittels einer Kolbenstange 28. Die Betätigungseinrichtung 27 kann beispielsweise ein pneumatisch betriebener Kolbenzylinder oder ein elektrischer Antrieb sein. Die Linearachse der Verstelleinrichtung 27, 28 ist vorzugsweise etwa senkrecht zu der durch die Rohrleitungen 16 bzw. 18 definierten Rohrleitungsebene definiert (siehe Fig. 5).

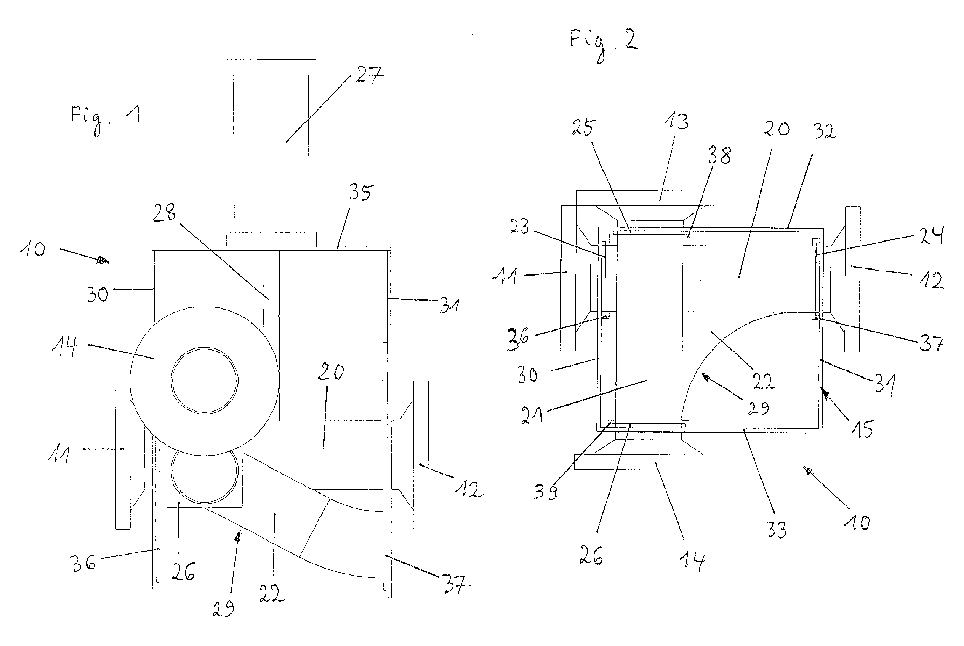

In der in den Fig. 1 und 2 gezeigten ersten Durchlassposition befindet sich das Verteilerelement 29 in der abgesenkten Stellung. In dieser Position ist das lineare Rohrstück 20 mit den Rohranschlüssen 11 und 12 dichtend verbunden, und das lineare Rohrstück 21 ist mit den Rohranschlüssen 13 und 14 dichtend verbunden. Das Verteilerelement 29 ermöglicht daher in der ersten Durchlassposition einen kreuzenden Produktfluss.

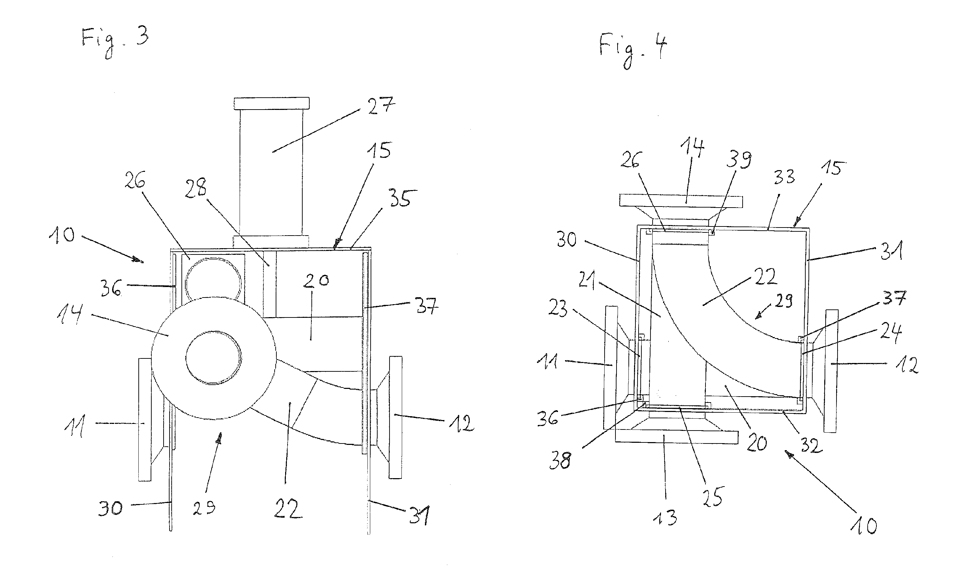

Wenn statt der zuvor erläuterten Durchlassverbindung eine den Produktfluss umlenkende Rohrverbindung der Rohranschlüsse 12 und 14 erwünscht ist, wird die Betätigungseinrichtung 27 manuell betätigt oder automatisch angesteuert, um die Stange 28 und somit auch das Verteilerelement ist 29 anzuheben. Das Verteilerelement 29 wird dabei mittels der in den Führungsschienen 36 bis 39 laufenden Verbindungselemente 23 bis 26 geführt. Die Verschiebung wird zweckmäßigerweise mittels eines nicht gezeigten Anschlags beendet, wenn das Verteilerelement 29 die in den Fig. 3 und 4 gezeigte zweite Durchlassposition erreicht hat. In dieser Position ist das gebogene Rohrstück 20 mit den Rohranschlüssen 12 und 14 dichtend verbunden. Das Verteilerelement 29 ermöglicht daher in der zweiten Durchlassposition einen umgelenkten Produktfluss.

In einer anderen, nicht gezeigten Ausführungsform kann ein zweites gebogenes Rohrstück zur Verbindung auch der Rohranschlüsse 11 und 13 in der angehobenen zweiten Durchlassposition vorgesehen sein.

Ausgehend von der angehobenen zweiten Durchlassposition des Verteilerelements 23 bis 26 kann durch erneute Betätigung des Betätigungselements das Verteilerelement 23 bis 26 in die erste Durchlassposition abgesenkt werden. Die Verschiebung kann ebenfalls mittels eines nicht gezeigten Anschlags in der ersten Durchlassposition beendet werden.

Eine Anwendung des in den Fig. 1 bis 4 gezeigten Verteilerelements 23 bis 26 ist in Fig. 5 dargestellt. Gezeigt ist ein Ausschnitt aus einer Rohrleitungsanlage mit einer Mehrzahl von beispielsweise acht ersten Rohrleitungen 16A, 168, 16C, ... und einer Mehrzahl von beispielsweise drei zweiten Rohrleitungen 18A, 18B, 18C. Zum Verbinden der Rohrleitungen 16A, 16B, 16C, ..., 18A, 18B, 18C ist eine Verteileranordnung 40 in Form einer Mehrzahl von Verteilerelementen 10AA, 10AB, 10AC, 10BA, ... vorgesehen. Die Verteilerelemente 10AA, 10AB, 10AC, 10BA, ... sind in den Knotenpunkten der Rohrleitungen 16A, 16B, 16C, ..., 18A, 18B, 18C in der Form einer Matrix angeordnet. Durch Einstellung jedes Verteilerelements 10AA, 10AB, 10AC, 10BA, ... in der ersten oder der zweiten Durchlassposition können die gewünschten Durchlassverbindungen zwischen den Rohrleitungen 16A, 16B, 16C, ..., 18A, 18B, 18C hergestellt werden. In dem Beispiel gemäß Fig. 5 kann beispielsweise Produkt von einem mit der Rohrleitung 16A verbundenen Tank zu einem mit der Rohrleitung 18B verbundenen Füller, von einem mit der Rohrleitung 16E verbundenen Tank zu einem mit der Rohrleitung 18C verbundenen Füller, von einem mit der Rohrleitung 18A verbundenen Mischer zu einem mit der Rohrleitung 16D verbundenen Tank und von einem mit der Rohrleitung 16G verbundenen Tank zu einem mit der Rohrleitung 16H verbundenen Tank fließen. Nach einer Verstellung des Verteilerelements 10AB kann Produkt von dem mit der Rohrleitung 16A verbundenen Tank in den mit der Rohrleitung 16B verbundenen Tank fließen. Nach einer weiteren Verstellung des Verteilerelements 10DA kann Produkt von einem mit der Rohrleitung 16C verbundenen Tank in den mit der Rohrleitung 16D verbundenen Tank und von dem mit der Rohrleitung 18A verbundenen Mischer zu dem mit der Rohrleitung 18B verbundenen Füller fließen. Nach einer Verstellung des Verteilerelements 10EC kann Produkt von dem mit der Rohrleitung 16E verbundenen Tank zu dem mit der Rohrleitung 18C verbundenen Füller fließen.

In der in Fig. 5 gezeigten Verteileranlage ist jede Durchlassverbindung zwischen den Rohren 16A, 16B, 16C, ..., 18A, 18B, 18C in jeder Durchlassposition der Verteilerelemente ohne Einschränkung, d.h. von einer Rohrleitung durchgängig bis zur anderen, molchbar.

Anstelle der in Fig. 5 gezeigten 180°-Rohrbögen 17A, ..., 17D; 19A und des Blindflansches 19B können in einer anderen Anwendung ebenfalls Rohrleitungen an den entsprechenden Rohranschlüssen vorgesehen sein.

Die Anordnung muss nicht notwendigerweise eine Matrixform aufweisen; die Verteilervorrichtungen sind beliebig modulartig kombinierbar.

In einer Verteileranordnung können sämtliche jeweils einem Rohrleitungs-Knotenpunkt zugeordnete Verteilervorrichtungen erfindungsgemäß ausgeführt sein. Dies ist aber keineswegs zwingend der Fall. Es kann auch je nach Bedarf lediglich ein Teil sämtlicher Verteilervorrichtungen erfindungsgemäß ausgeführt sein und die übrigen Knotenpunkte beispielsweise mit festen Rohrleitungsverbindungen versehen sein, falls die je nach Anwendung ausreichend ist.

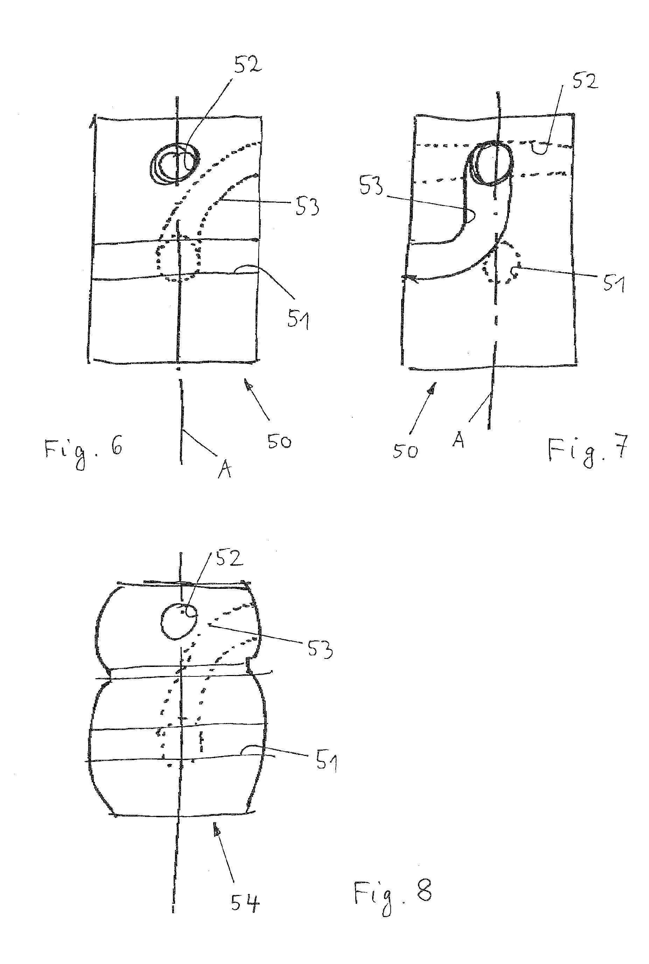

Das Verteilerelement gemäß den Fig. 6, 7 besteht aus einem zylindrischen Körper 50, der um die Zylinderachse A in einer nicht gezeigten Verteilervorrichtung drehbar gelagert ist. Die Leitungsabschnitte sind hier beispielsweise als molchbare Durchgangsbohrungen 51 bis 53 des Körpers 50 ausgeführt. Das Verteilerelement 50 umfasst beispielsweise zwei axial versetzt angeordnete lineare Durchgangsbohrungen 51, 52 und eine im Wesentlichen um 90° gebogene Durchgangsbohrung 53. In der in Fig. 6 dargestellten ersten Durchlassposition sind die Durchgangsbohrungen 51 und 52 mit entsprechenden nicht gezeigten Rohranschlüssen dichtend verbunden. In der in Fig. 7 dargestellten zweiten Durchlassposition ist die gebogene Durchgangsbohrung 53 mit zwei der Rohranschlüsse dichtend verbunden, während die anderen beiden Rohranschlüsse durch entsprechende Außentlächen des Körpers 50 dichtend verschlossen sind.

Das Verteilerelement 54 gemäß Fig. 8 ist eine Abwandlung des Verteilerelements gemäß den Fig. 6, 7. Das Verteilerelement 54 ist mindestens im Bereich der Mündungen der Durchgangsbohrungen 51 bis 53 kugelförmig geformt. Durch diesen (Doppel-)Kugelhahn kann eine Verbesserung der Dichtwirkung erzielt werden.

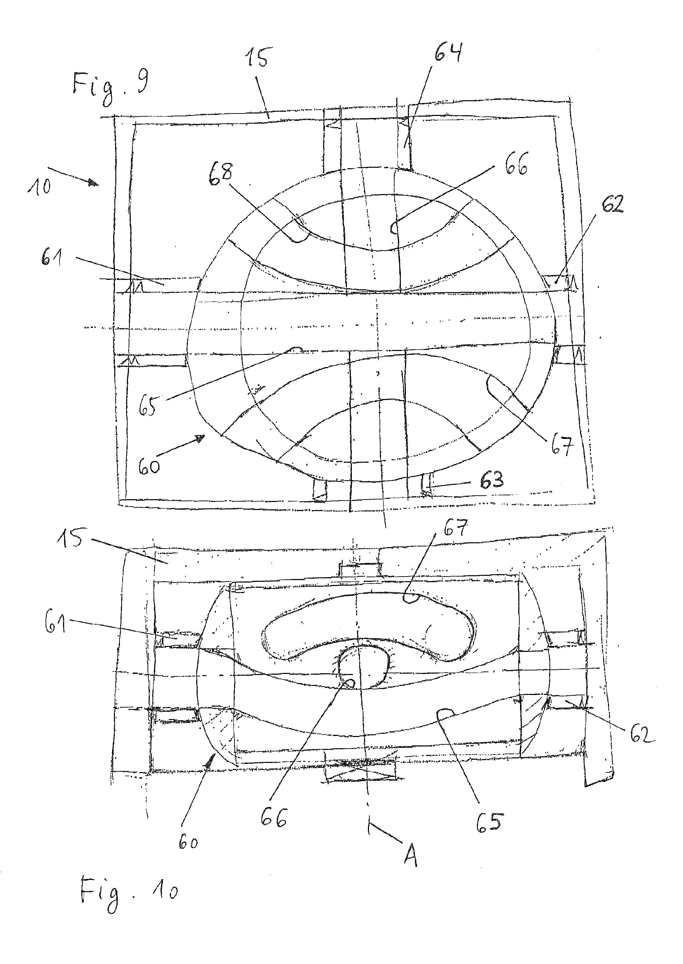

Eine weitere Ausführungsform eines drehbar gelagerten Verteilerelements 60 ist in den Fig. 9, 10 gezeigt. Das Verteilerelement 60 in der Form eines einfachen Kugelhahns ist zur Verbindung von Rohranschlüssen 61 bis 63 geeignet, die im wesentlichen in einer Ebene der Rohranlage liegen, also nicht vertikal versetzt angeordnet sind wie beispielsweise die Rohrleitungen 16, 18 in Fig. 5. Zu diesem Zweck weist das Verteilerelement 60 im Wesentlichen in einer Ebene liegende Leitungsabschnitte 65 bis 68 auf. In der in Fig. 9 gezeigten ersten Durchlassposition des Verteilerelements 60 verbindet der im wesentlichen lineare Leitungsabschnitt 65 die Rohranschlüsse 61 und 62 und der lineare Leitungsabschnitt 66 die Rohranschlüsse 63 und 64 dichtend. In der in Fig. 10 gezeigten zweiten Durchlassposition des Verteilerelements 60 verbindet der im wesentlichen um 90° gebogene Leitungsabschnitt 67 beispielsweise die Rohranschlüsse 61 und 63 und der im Wesentlichen um 90° gebogene Leitungsabschnitt 68 die Rohranschlüsse 62 und 64 dichtend.

## Patentansprüche

1. Molchbare Verteilervorrichtung (10) zum Herstellen von Verbindungen einer Mehrzahl einen Knotenpunkt definierender Rohrleitungen (16-19), mit mindestens zwei molchbaren Leitungsabschnitten (20-22; 51-53; 65-68) zur Herstellung unterschiedlicher Rohrverbindungen zwischen einer Mehrzahl den Rohrleitungen (16-19) entsprechender Rohranschlüsse (11-14; 61-64), **dadurch gekennzeichnet, das** s die Verteilervorrichtung (10) ein einheitliches Verteilerelement (29; 50; 54; 60) umfasst, in dem die Leitungsabschnitte (20-22; 51-53; 65-68) angeordnet sind und das zwischen einer ersten Durchlassposition, in der ein erster der Leitungsabschnitte (20-22; 51-53; 65-68) eine erste molchbare Durchlassverbindung zweier Rohranschlüsse herstellt, und einer zweiten Durchlassposition, in der ein zweiter der Leitungsabschnitte (20-22; 51-53; 65-68) eine zweite molchbare Durchlassverbindung zweier Rohranschlüsse herstellt, mechanisch verstellbar ist, wobei sämtliche Durchlassverbindungen zwischen den Rohranschlüssen (11-14; 61-64) der Verteilervorrichtung (10) in sämtlichen Durchlasspositionen molchbar sind, wobei das Verteilerelement (50; 54; 60) dreh- bzw. schwenkbar gelagert ist.

2. Verteilervorrichtung nach Anspruch 1, **dadurch gekennzeichnet, dass** eine Führungseinrichtung (36-39) zum geführten Verschieben des Verteilerelements (29) vorgesehen ist.

3. Verteilervorrichtung nach Anspruch 2, **dadurch gekennzeichnet, dass** die Führungseinrichtung als Linearführung ausgebildet ist.

4. Verteilervorrichtung nach Anspruch 3, **dadurch gekennzeichnet, dass** die Linearführungsachse im Wesentlichen senkrecht zu einer Rohrleitungsebene orientiert ist.

5. Verteilervorrichtung nach einem der Ansprüche 1 bis 4, **dadurch gekennzeichnet, dass** die Dreh- bzw. Schwenkachse im Wesentlichen senkrecht zu einer Rohrleitungsebene orientiert ist.

6. Verteilervorrichtung nach einem der Ansprüche 1 bis 5, **dadurch gekennzeichnet, dass** Verschlussmittel zum Verschließen der Rohranschlüsse (11-14; 61-64) beim Verstellen des Verteilerelements (29; 50; 54; 60) vorgesehen sind.

7. Verteilervorrichtung nach Anspruch 6, **dadurch gekennzeichnet, dass** die Verschlusselemente von Oberflächen des Verteilerelements (29; 50; 54; 60) gebildet werden.

8. Verteilervorrichtung nach Anspruch7, **dadurch gekennzeichnet, dass** im Fall eines dreh- bzw. schwenkbar gelagerten Verteilerelements (54; 60) die die Rohranschlüsse verschließenden Oberflächen des Verteilerelements (54; 60) kugelförmig sind.

9. Verteilervorrichtung nach einem der Ansprüche 1 bis 8, **dadurch gekemizeichnet, dass** die Verteilervorrichtung (29; 50; 54; 60) zur Verbindung sich kreuzender Rohrleitungen (16-19), insbesondere sich rechtwinklig kreuzender Rohrleitungen eingerichtet ist.

10. Verteilervorrichtung nach einem der Ansprüche 1 bis 9, **dadurch gekennzeichnet, dass** die Verteilervorrichtung (29; 50; 54; 60) zur im Wesentlichen linearen Verbindung mindestens zweier Rohranschlüsse eingerichtet ist.

11. Verteilervorrichtung nach einem der Ansprüche 1 bis 10, **dadurch gekennzeichnet, dass** die Verteilervorrichtung (29; 50; 54; 60) zur umgelenkten Verbindung, vorzugsweise zur im Wesentlichen um 90° umgelenkten Verbindung mindestens zweier Rohranschlüsse eingerichtet ist.

12. Molchbare Rohrleitungsanlage mit einer Mehrzahl von Rohrleitungen (16-19) und mindestens einer Verteilervorrichtung (10) nach einem der Ansprüche 1 bis 11 zur Herstellung von molchbaren Rohrverbindungen zwischen den Rohrleitungen (16-19) der Rohrleitungsanlage.

13. Rohrleitungsanlage nach Anspruch 12, **dadurch gekennzeichnet, dass** die Rohrleitungsanlage eine Mehrzahl von Verteilervorrichtungen (10) aufweist, wobei jede Verteilervorrichtung (10) einem Rohrleitungs-Verknüpfungspunkt separat zugeordnet ist.

14. Rohrleitungsanlage nach Anspruch 13, **dadurch gekennzeichnet, dass** die Rohrleitungsanlage eine Mehrzahl von in Matrixform angeordneten Rohrleitungs-Verknüpfungspunkten aufweist.
